**Europäisches Patentamt**

**European Patent Office**

**Office européen des brevets**

(19)

(11) Veröffentlichungsnummer: **0 061 038**

**A1**

(12) # EUROPÄISCHE PATENTANMELDUNG

(21) Anmeldenummer: **82101714.2**

(22) Anmeldetag: **05.03.82**

(51) Int. Cl.³: **C 08 F 210/02**

(30) Priorität: **14.03.81 DE 3109950**

(43) Veröffentlichungstag der Anmeldung:
**29.09.82 Patentblatt 82/39**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Oeder, Dieter, Dr.**
**Antoniusstrasse 1**
**D-5047 Wesseling(DE)**

(72) Erfinder: **Dietsche, Wolfram, Dr.**
**Albrecht-Duerer-Ring 34B**
**D-6710 Frankenthal(DE)**

(72) Erfinder: **Weiss, Stefan, Dr.**
**Carl-Beck-Strasse 46**
**D-6903 Neckargemuend(DE)**

(72) Erfinder: **Ziegler, Walter, Dr.**
**Starenweg 15**
**D-6803 Edingen(DE)**

(72) Erfinder: **Hettche, Albert, Dr.**
**Kleiststrasse 12**
**D-6711 Hessheim(DE)**

(54) **Hartwachse aus Terpolymerisaten des Ethylens mit ungesättigten Carbonsäuren und ungesättigten Carbonsäureestern.**

(57) In Wasser emulgierbare Hartwachse bestehend aus homogenen Terpolymeren des Ethylens mit - bezogen auf das Gewicht des Terpolymeren - 1 bis 8 Gew.% an $C_3$- bis $C_8$-olefinisch ungesättigten Carbonsäuren, und 0,5 bis 10 Gew.% an $C_1$ bis $C_{12}$-Alkylestern der ungesättigten Carbonsäuren mit folgenden Kenndaten:

| | |
|---|---|
| Staudinger-Index bestimmt nach DIN 53 728 | 5 bis 55 |
| Säurezahl | 8 bis 62 |
| Höppler-Härte nach DGF-Einheitsmethode M-III-9a(57), gemessen bei 23°C | 250 bis 800 bar. |

Die Hartwachse ergeben in Pflegemitteln eingesetzt glänzende und klebefreie Filme. Man erhält die Hartwachse durch Copolymerisation des Ethylens mit olefinisch ungesättigten $C_3$- bis $C_8$-Carbonsäuren und ungesättigten $C_3$- bis $C_8$-Carbonsäureestern mit $C_1$- bis $C_{12}$-Alkanolen in kontinuierlicher Fahrweise in Gegenwart von Radikale bildenden Initiatoren bei Temperaturen von 150 bis 300°C und Drücken von 1000 bis 3000 bar in einem Gewichtsverhältnis Ethylen zu Säure zu Acrylat wie 500:1:1 bis 20:1:1. In einphasigem Polymerisationsmilieu, in dem die Monomeren löslich sind, und in Gegenwart von 0,01 bis 8 Gew.-%, bezogen auf die Summe der Monomeren an Reglern, wobei 3 bis 25 Gew.-% des Ethylens umgesetzt und das gebildete Copolymerisat kontinuierlich aus der Reaktionszone entfernt wird.

BASF Aktiengesellschaft                    O.Z. 0050/035005

Hartwachse aus Terpolymerisaten des Ethylens mit ungesättigten Carbonsäuren und ungesättigten Carbonsäureestern

Die Erfindung betrifft neue Hartwachse. Sie bestehen aus Ethylen, olefinisch ungesättigten Carbonsäuren und Estern dieser ungesättigten Carbonsäuren, die gegenüber Standardwachsen eine höhere Thermo- und Alkalistabilität sowie verbesserte Emulgiereigenschaften besitzen und als hochmolekulare Wachse Glanzverhalten und Zähigkeit verbessern.

Gebräuchliche emulgierbare Polyethylen-(PE)-Wachse werden durch Schmelzoxidation von niedermolekularen nicht emulgierbaren PE-Wachsen erhalten. Es existiert hierzu eine Vielzahl von Publikationen, unter anderem DE-AS 11 80 131, DE-AS 16 45 411, DE-AS 12 37 783, US-Patentschrift 2 952 649 und französische Patentschrift 1 343 962.

Diese Wachsgruppe hat aber den Nachteil, daß es sich bei ihr nicht um definierte chemische Verbindungen handelt. Durch die Schmelzoxidation werden neben den für die Emulgierung notwendigen Carboxylgruppen auch Hydroxylgruppen, Carbonylgruppen und Peroxidgruppen in dem Polymermolekül eingebaut. Folgen sind thermische Unbeständigkeit, Alkaliempfindlichkeit, Verfärbungen bei Konfektionierungen zur Emulsion oder bei der Anwendung.

Eine weitere Gruppe von Wachsen, die chemisch definiert sind, sind Copolymere aus Ethylen und Acrylsäure, wie sie in der DE-AS 17 20 232 beschrieben sind. Diese Produkte haben wiederum den Nachteil, daß ihr Emulgierverhalten schlechter im Vergleich zu den Schmelzoxidaten ist. Außerdem sind für gut emulgierbare Produkte Acrylsäuregehalte von $> 4,5$ % erforderlich.

Ze/P

Telomerwachse aus Ethylen, Acrylsäure und Vinylacetat werden in der DE-OS 22 33 360 beschrieben. Wie aber dem Fachmann hinlänglich bekannt, bringt Vinylacetat wieder eine deutliche Abnahme der Thermo- und Verseifungsstabilität.

Das Ziel der vorliegenden Erfindung bestand somit darin, wachsartige Terpolymere zu finden, die neben Farb- und Geruchlosigkeit thermo- und verseifungsstabil sind, ein gutes Emulgierverhalten bei möglichst niedrigem Säuregehalt zeigen, stabile Emulsionen ergeben, und in Polymerfilmen Zähigkeit und Kratzfestigkeit bewirken.

Dieses Ziel wird mit Terpolymeren erreicht, wie sie gemäß den Patentansprüchen definiert sind.

Die Terpolymerisate enthalten 1 bis 8, vorzugsweise 2 bis 6 Gew.-% einer $C_3$ bis $C_8$-alpha-olefinisch ungesättigten Carbonsäure und 0,5 bis 10, vorzugsweise 1 bis 8 Gew.-% eines Esters ungesättigter $C_3$- bis $C_8$-Carbonsäuren mit 1 bis 12, vorzugsweise 1 bis 6 C-Atomen in der Alkoholkomponente.

Technisch von besonderem Interesse sind Gehalte von 2,5 bis 5 Gew.-% Carbonsäure und 2 bis 6 % Carbonsäureester mit 2 bis 4 C-Atomen in der Alkoholkomponente.

Säuren im Sinne der Erfindung sind z.B. Acrylsäure, Methacrylsäure, Krotonsäure, Maleinsäure, Fumarsäure und Itakonsäure. Technisch bevorzugt sind Acrylsäure und Methacrylsäure.

Ester im Sinne der Erfindung sind z.B. Acrylsäuremethylester, Acrylsäureethylester, Acrylsäurepropylester, Acrylsäurebutylester, Acrylsäurepentylester, Acrylsäure-

0061038

hexylester, Acrylsäureheptylester, Acrylsäureoctylester, Acrylsäurenonylester, Methacrylsäuremethylester, Methacrylsäureethylester, Methacrylsäurebutylester, Methacrylsäurehexylester, Methacrylsäureoctylester, Crotonsäuremethylester, Crotonsäureethylester, Crotonsäurebutylester, Maleinsäuredimethylester, Maleinsäurediethylester, Fumarsäurediethylester, Fumarsäuredibutylester, Itakonsäuredibutylester.

Außer den genannten Carbonsäuren und deren Estern können auch die entsprechenden Alkylhalbester der Malein- und Fumarsäure eingesetzt werden.

Technisch bevorzugt sind die Methyl-, Ethyl- und Butylester der Acrylsäure und der Methacrylsäure, sowie die entsprechenden Halbester der Maleinsäure. Die Copolymerisate besitzen Staudinger Indices von 5 bis 55 Einheiten (bestimmt nach DIN 53 728).

Die Höppler-Härte beträgt 250 bis 800 bar, gemessen bei 23°C (DGF-Einheitsmethode - M-III-9a(57)), vorzugsweise 270 bis 650 bar.

Die Säurezahlen liegen bei 8 bis 62, vorzugsweise 20 bis 40, d.h. niedriger als bei Produkten gemäß dem Stand der Technik.

Bei vergleichbaren Wachsen des Standes der Technik (Ethylen-Acrylsäure-Copolymere) waren höhere Säurezahlen erforderlich um rahm-, stippenfreie und transparente Emulsionen herzustellen, wie die weiter unten angegebenen Versuchsergebnisse zeigen.

Bei den Luftoxidaten sind zwar niedrigere Säurezahlen vorhanden, infolge der anfangs geschilderten Nachteile

neigen aber diese Produkte auch in Emulsionen zu Verfärbungen.

Die Herstellung der Wachse erfolgt in an sich bekannter Weise durch kontinuierliche Hochdruckcopolymerisation von Ethylen mit den ungesättigten Carbonsäuren und Carbonsäureestern in Gegenwart von radikal- bildenden Initiatoren. Die Polymerisation findet bei Temperaturen von 150 bis 300°C und Drücken von 1000 bis 3000 bar statt. Das Gewichtsverhältnis Ethylen zu ungesättigter Carbonsäure und Carbonsäureester liegt bei 500 : 1 : 1 bis 20 : 1 : 1; und im Ansatz sind bezogen auf die Summe der Monomeren 0,01 bis 8 Ges.-% an Reglern anwesend.

Kontinuierlich werden 3 bis 25 Gew.-% des Ethylens umgesetzt und das gebildete Polymerisat kontinuierlich aus der Reaktionszone entfernt.

Wichtig bei der Herstellung der Hartwachse ist die richtige Dosierung von Acrylsäure, Acrylat, Reglern und Initiatoren, da sonst Nachteile wie hohes Molekulargewicht, schlechtes Emulgierverhalten, niedrige Härte und somit schlechte Filmeigenschaften eintreten.

Ein auf den ersten Blick sehr ähnliches Verfahren ist aus der DE-AS 15 20 497 bekannt. Dieses Verfahren arbeitet ebenfalls kontinuierlich, doch ohne Zusätze von Reglern und vorzugsweise in Gegenwart von Lösungsmitteln wie Benzol. Hierbei erhält man aber Produkte mit Klebeeigenschaften, die sich z.B. als Faserbindemittel eignen, d.h. Stoffe, die nicht als Hartwachse, die klebefreie Filme ergeben sollen, tauglich sind.

Es war somit überraschend, daß bei einem ähnlichen chemischen Prozeß Produkte mit so unterschiedlichen anwendungstechnischen Eigenschaften hergestellt werden können.

Die Produkte werden wie gesagt erhalten durch kontinuierliche Copolymerisation des Ethylens mit der ethylenisch ungesättigten Säure und dem Säureester bei hohen Ethylendrücken von 1000 bis 3000 bar und bei Temperaturen von 150 bis -300°C. Die Polymerisation erfolgt in einphasigem Polymerisationsmedium mit Ethylenumsätzen von max. 25%, wobei das im überkritischen Zustand vorliegende Ethylen als Lösungsmittel für das Reaktionsgemisch und die Polymerschmelze dient. Ein zusätzliches Lösungsmittel ist nicht erforderlich. Die Dosierung der ethylenisch ungesättigten Säuren und der Säureester muß getrennt von dem verwendeten radikalischen Polymerisationsstarter in das Reaktionsgemisch erfolgen. Die Dosierung der für die Einstellung des Molekulargewichts erforderlichen Regler kann zusammen mit Comonomeren bzw. mit dem radikalischen Starter erfolgen.

Als Regler setzt man allgemein übliche Substanzen, die diese Funktion ausüben, ein. Hierzu gehören z.B. aliphatische Aldehyde mit 3 bis 6 C-Atomen, wie Propionaldehyd oder n-Butyraldehyd oder aliphatische Ketone mit 3 bis 6 C-Atomen wie Keton oder Methylethylketon. Bezogen auf die Summe der Monomeren sind 0,01 bis 8, vorzugsweise 0,1 bis 5 Gew.% an Reglern anwesend.

Die Erfindung soll nun durch die Beispiele näher belegt werden, ohne daß hierdurch die Erfindung eingeschränkt wird.

Beispiel 1

Eine Mischung von 320 kg/h Ethylen, 2,5 kg/h Acrylsäure, 1,3 kg/h n-Butylacrylat und 0,57 kg/h Propionaldehyd

(Temperatur des Gemische: 35°C) wird kontinuierlich durch einen auf einen Druck von 2300 bar gehaltenen 15 l-Rührautoklaven geleitet. Durch die kontinuierliche Zugabe von 26,6 g/h tert.-Butylperisononanat (in der Regel in einem geeigneten Lösungsmittel) wird die Temperatur im Autoklaven bei 240°C gehalten. Das durch Entspannung des Reaktionsgemisches in einer Menge von 56,6 kg/h anfallende Polymerisat entspricht einem Umsatz von 17,7 % (bezogen auf den Ethylen-Durchsatz). Es enthält 4,1 Gew.-% Acrylsäure und 2,0 Gew.-% n-Butylacrylat. Der Staudingerindex dieses Produktes beträgt 27,5 Einheiten.

Die folgenden Beispiele 2 bis 16 sind vom Ablauf her entsprechend Beispiel 1 durchgeführt; die unterschiedlichen Herstellbedingungen und die Produktparameter sind in Tabelle 1 zusammengefaßt.

Tabelle 1

| Beispiel Nr. | AS-Gehalt (Gew.%) | n-BA (Gew.%) | 2-Ethyl-hexyl-acrylat (Gew.%) | Methyl-acrylat (Gew.%) | Druck bar | T max. (°C) | T min. (°C) | Ethylen-Durchsatz (kg/h) | AS-Dos. (kg/h) | n-BA-Dos. (kg/h) |
|---|---|---|---|---|---|---|---|---|---|---|
| 1 | 4,1 | 2,0 | - | - | 2300 | 240 | 35 | 320 | 2,6 | 1,3 |
| 2 | 3,5 | 3,0 | - | - | 2300 | 240 | 35 | 307 | 2,1 | 1,9 |
| 3 | 2,9 | 3,9 | - | - | 2300 | 240 | 35 | 312 | 1,8 | 2,5 |
| 4 | 3,1 | 2,2 | - | - | 2300 | 240 | 35 | 298 | 1,8 | 1,4 |
| 5 | 2,5 | 3,9 | - | - | 2300 | 240 | 35 | 306 | 1,5 | 2,5 |
| 6 | 4,4 | 2,1 | - | - | 2100 | 240 | 35 | 308 | 2,7 | 1,4 |
| 7 | 5,0 | 2,0 | - | - | 2100 | 240 | 35 | 315 | 3,1 | 1,3 |
| 8 | 5,5 | 2,8 | - | - | 2000 | 240 | 35 | 318 | 3,7 | 1,9 |
| 9 | 3,9 | 4,1 | - | - | 1900 | 240 | 35 | 309 | 2,4 | 2,7 |
| 10 | 5,1 | 1,9 | 2,7 | - | 1800 | 250 | 35 | 311 | 3,3 | 1,3 |
| 11 | 4,6 | 2,9 | 2,5 | - | 1800 | 250 | 35 | 314 | 3,0 | 2,0 |
| 12 | 4,3 | - | - | - | 2100 | 240 | 35 | 305 | 2,7 | - |
| 13 | 3,1 | - | - | - | 2100 | 240 | 35 | 298 | 1,9 | - |
| 14 | 4,2 | - | - | 2,2 | 2300 | 240 | 35 | 320 | 2,4 | - |
| 15 | 4,4 | - | - | 2,5 | 2300 | 240 | 35 | 300 | 1,8 | - |
| 16 | 3,5 | - | - | 4 | 2300 | 240 | 35 | 310 | 2,4 | - |

AS = Acrylsäure
nBA = n-Butylacrylat
DOS = Dosierung
TBIN = tert.-Butylperisononanat
PA = Propionaldehyd
E = Ethylen

Tabelle 1  Forts.

| Beispiel Nr. | 2-Ethyl-hexyl-acrylat Dosierung (kg/h) | Methyl-acrylat Dosierung (kg/h) | TBIN-Dos. (g/h) | PA-Dos. (kg/h) | Ausstoß (kg/h) | Umsatz (bzw. auf E) (%) | Erstar-rungspkt. (°C) | Höppler-härte (bar 23°C) | Staudinger Index |
|---|---|---|---|---|---|---|---|---|---|
| 1 | - | - | 26,6 | 0,57 | 56,6 | 17,7 | 98 | 570 | 27,5 |
| 2 | - | - | 23,2 | 0,75 | 54,5 | 17,8 | 97 | 550 | 25,3 |
| 3 | - | - | 20,0 | 0,92 | 55,6 | 17,8 | 96 | 450 | 19,2 |
| 4 | - | - | 209 | 0,53 | 52,3 | 17,5 | 98 | 570 | 33,6 |
| 5 | - | - | 16,8 | 0,12 | 54,3 | 17,7 | 101 | 610 | 43,5 |
| 6 | - | - | 26,3 | 0,93 | 54,7 | 17,8 | 95 | 370 | 17 |
| 7 | - | - | 29,8 | 1,15 | 56,2 | 17,9 | 94 | 350 | 15,7 |
| 8 | - | - | 39,3 | 1,36 | 57,8 | 18,2 | 93 | 300 | 13,5 |
| 9 | - | - | 23,4 | 1,61 | 55,8 | 18,0 | 92 | 270 | 11,3 |
| 10 | - | - | 139,1 | 1,33 | 58,2 | 18,7 | 90 | 290 | 10,2 |
| 11 | - | - | 85,7 | 1,45 | 59,1 | 18,8 | 90 | 260 | 8,3 |
| 12 | 1,6 | - | 25,9 | 0,95 | 54,8 | 17,9 | 92 | 308 | 17,5 |
| 13 | 1,5 | - | 21,2 | 0,65 | 51 | 17,5 | 92 | 295 | 32 |
| 14 | - | 1,4 | 25 | 0,55 | 55,8 | 17,8 | 99 | 600 | 29 |
| 15 | - | 1,4 | 20,5 | 0,53 | 52,3 | 17,5 | 100 | 630 | 35 |
| 16 | - | 2,5 | 22 | 0,6 | 55,5 | 18 | 100 | 580 | 29 |

AS   = Acrylsäure
nBA  = n-Butylacrylat
DOS  = Dosierung
TBIN = tert.-Butylperisononanat
PA   = Propionaldehyd

0061038

Die in den Versuchen 1 bis 16 hergestellten Wachsproben
wurden unter·Verwendung von nichtionischen Emulgatoren
wie Fettalkoholethoxylate oder Alkylphenolethoxylate
in Gegenwart von Alkali zu rahm- und stippenfreien hochtransparenten Wachsemulsionen emulgiert.

Beispiel 17

Zur Emulgierung des in Beispiel 1 beschriebenen Wachsgranulates wurden 20 Teile Wachs, 4 Teile eines nichtionisches Emulgators (Alkylphenolethoxylat mit 8 bis 10
Ethylenoxid (EO), $C_9C_{11}$-gradkettig oder verzweigte Fettalkohole mit 7 EO, $C_{13}C_{15}$-gradkettig oder verzweigte
Fettalkohole mit 10 EO), 0,3 Teile Kaliumhydroxid,
0,72 Teile Ethylenglykol und 30 Teile Wasser bei 135
bis 145°C unter Druck zu einer homogenen Schmelze verrührt. Anschließend wurden unter Rühren 44 Teile Restwasser zugefahren. 15 min wurde nachgerührt. Die Wachsemulsion wurde dann schnell abgekühlt. Man erhielt eine
von Stippen und Rahm freie Wachsemulsion. Sie zeigte in
1%iger Verdünnung in einer 1 cm Zelle eine Lichtdurchlässigkeit von 66 %. Nach 2 Monaten Standzeit war die
Emulsion noch frei von Aufrahmungen.

Aufstriche auf der Glasplatte verfilmen bei Zimmertemperatur zu klaren, glänzenden zähen nicht klebenden
Stippen freien Filmen, wie sie für den Pflegemittelbereich erwünscht sind.

Beispiel 18

Zur Emulgierung des in Beispiel 2 beschriebenen Wachsgranulates wurden in einem Druckautoklaven mit Propellerrührer 25 Teile Wachs, 4,5 Teile eines Alkylphenolethoxylates mit 9 EO, 0,375 Teile Kaliumhydroxid, 0,9 Teile Ethylenglykol und 28 Teile Wasser vorgelegt. Die Mischung wurde unter Rühren auf 120 bis 140°C erhitzt. Nachdem die Komponenten zu einer homogenen Schmelze zusammengerührt waren, wurden noch 41 Teile Wasser unter Druck zugegeben. Es wurde noch einmal auf 130°C aufgeheizt, 10 bis 20 Minuten wurde nachgerührt und dann unter wenigem Rühren schnell auf Raumtemperatur abgekühlt.

Es wurde eine Wachsemulsion erhalten, die stippenfrei war und in 1%iger Verdünnung eine Lichtdurchlässigkeit von 65 % zeigte. Auch nach 2 Monaten Lagerzeit konnte keine Aufrahmung der Emulsion beobachtet werden. Aufstriche auf der Glasplatte ergaben stippenfreie und klar auftrocknende, zähe, glänzende und klebefreie Filme.

Beispiel 19

Im 1 l Druckautoklaven mit Propellerrührer wurden vorgelegt 20 Teile Wachs entsprechend Beispiel 4, 4 Teile mit 7 EO alkoxylierter Isodecylalkohol, 0,3 Teile Kaliumhydroxid, 1 Teil Diethylethanolamin und 30 Teile Wasser und bei 120 bis 130°C unter Eigendruck zu einer Schmelze verrührt. Anschließend wurden unter Druck 45 Teile Wasser zugegeben. Es wurde kurz nachgerührt, dann unter mäßigem Rühren auf 40°C abgekühlt.

Es wurde eine Wachsemulsion erhalten, die stippenfrei war und einen Lichtdurchlässigkeitswert von 63 % zeigte. Nach 2 Monaten Lagerzeit konnte noch keine Aufrahmung festgestellt werden. Aufstriche auf Glasplatten ergaben stippenfreie und klar auftrocknende, zähe, glänzende und klebefreie Filme.

Beispiel 20

Im 1 1 Druckautoklaven wurden vorgelegt 160 Teile Wachs aus Beispiel 5, 40 Teile alkoxylierter Decylalkohol mit 7 EO, 3,5 Teile Kaliumhydroxid, 1,5 Teile Natriumbisulfit und 175 Teile Wasser und bei 130°C zu einer homogenen Schmelze verrührt. Anschließend wurden noch 263 Teile Wasser unter Druck zugegeben. Es wird 15 Minuten nachgerührt und dann auf 40°C abgekühlt.

Es wurde eine hochtransparente Emulsion mit einer Lichtdurchlässigkeit von 85 % erhalten. Sie ist lagerstabil, nach 2 Monaten konnte keine Aufrahmung beobachtet werden. Aufstriche auf der Glasplatte ergaben stippenfreie und klar auftrocknende, zähe, glänzende und klebefreie Filme.

Die erfindungsgemäßen Wachse haben noch den weiteren Vorteil, daß sie trotz hoher Wachshärte und z. Teil auch hoher Viskosität einfach drucklos nach konventionellen Methoden emulgierbar sind und dann im Vergleich zu den Schmelzoxidaten unabhängig ob mit ionischen oder nichtionischen Emulgatoren emulgiert in allen Fällen nicht gefärbte Emulsionen ergeben. Die Beispiele 21 bis 27 sollen diesen Sachverhalt belegen.

Beispiel 21

In einem offenen Emulgiergefäß werden vorgelegt 283 Teile Wasser, 8 Teile Alkylphenolethoxylat mit 9 EO und auf 95 bis 98°C aufgeheizt, unter Rühren wird eine Wachsschmelze aus 40 Teilen Wachs aus Beispiel 9, 0,6 Teile Kaliumhydroxid und 1,2 Teilen Ethylenglykol zulaufen lassen. Nach dem Abkühlen erhält man eine von Rahm und Stippen freie Wachsemulsion, die in 1%iger Verdünnung in der 1 cm Küvette eine Lichtdurchlässigkeit von 70 %
aufweist. Die Wachsemulsion ist über Monate lagerstabil
und kann in der Papier- oder Textilindustrie und anderen
chemisch-technischen Bereichen zur Anwendung kommen.

Beispiel 22

In einem offenen Emulgiergefäß werden vorgelegt 148 Teile
Wasser und 6 Teile Olein. Bei 95 bis 98 $^{\circ}$C wird unter
Rühren langsam 46 Teile Wachsschmelze aus 40 Teilen
Wachs aus Beispiel 10 und 6 Teilen Diethylethanolamin
zulaufen lassen. Nach Beendigung wird abgekühlt auf Zimmertemperatur. Erhalten wird eine farblose Wachsemulsion.
In 1%iger Verdünnung hat sie eine Lichtdurchlässigkeit
von 80 %.

Weitere Beispiele sind aus der folgenden Tabelle 2
ersichtlich.

Tabelle 2

| Bsp. | Wachs Bsp.Nr. | Emulgiert nach Bsp.Nr. | Lichtdurchlässigkeit der Wachsemulsion in 1 cm Küvette [%] | Farbe Emulsion | Film auf Glasplatte |
|---|---|---|---|---|---|
| 23 | 11 | 21 | 75 | farblos bläulich opaleszierend | farblos klar |
| 24 | 9 | 22 | 80 | farblos bläulich opaleszierend | farblos klar |
| 25 | 8 | 21 | 70 | " | " |
| 26 | 8 | 22 | 75 | " | " |
| 27 | 10 | 21 | 80 | " | " |

Tabelle 3

Vergleichsbeispiele mit Wachsen vom Stand der Technik

| Bsp. | Wachs | Emulgiert nach Bsp.Nr. | Lichdurchlässigkeit der Wachsemulsion in 1 cm Küvette % | Farbe Emulsion | Film auf Glasplatte |
|---|---|---|---|---|---|
| 28 | oxidiertes PE-Wachs SZ 23 | 21 | 60 | beige | beige - sonst klar |
| 29 | oxidiertes PE-Wachs SZ 23 | 22 | 80 | beige-gelb | gelblich klar |
| 30 | oxidiertes PE-Wachs SZ 17 | 21 | 30 | milchig | milchig-stippig |
| 31 | DE-AS 17 20 232 Bsp. 3 | 50 | 50 | milchig | farblos klar |

Die Anwendungsgebiete der erfindungsgemäßen Wachse liegen allgemein im chemisch-technischen Bereich, in der Textilindustrie, der Kunststoffverarbeitung und insbesondere im Pflegemittelbereich. In Primärdispersionen vom Styrol/Acrylsäure/Acrylat-Typ führen die Wachsemulsionen der hochmolekularen und harten Wachse bei Zugabe von 1 bis 40 % auf Linoleum oder PVC-Bodenbelag zu hochglänzenden und kratzfesten Filmen mit deutlichen Vorteilen gegenüber Produkten gemäß dem Stand der Technik.

Die folgenden Beispiele sollen diesen Effekt belegen.

Allgemeine Versuchsdurchführung

Eine Mischung aus 40 Teilen der erfindungsgemäßen Wachsemulsion, 30 Teilen einer Primärdispersion aus Styrol/Acrylsäure/Acrylat-Basis, 17 Teilen Wasser, 13 Teilen einer 15%igen Netzharzlösung, 0,3 Teilen Tributoxyethylphosphat, 0,2 Teilen Tributylphosphat und 1 Teil Fluortensid wurde den Versuchen zugrundegelegt.

Die Pflegemittelmischung wurde mit einem feinhaarigen Pinsel auf einen Standard-PVC-Fußbodenbelag aufgetragen. Bei Zimmertemperatur verfilmte die Emulsion zu einem glänzenden, zähen Pflegemittelfilm, dessen Glanz mit Hilfe des Universal Reflekometers von Dr. Lange mit 85°Meßkopf bestimmt wurde. Geeicht wurde auf schwarzer Platte auf Glanzzahl 50.

Die Kratzfestigkeit, Zähigkeit und Anschmutzbarkeit des Filmes wird durch Auftrag eines Filmes auf weißes PVC und Aufbringen von schwarzen Absatzstrichen geprüft. Beurteilt wird die Aufnahme von schwarzem Absatzgummi und das Aufreißen des Filmes. 1 bedeutet keine Aufnahme von schwarzem Absatzgummi bzw. keine Filmverletzung, 5 bedeutet starke schwarze Absatzstriche und Aufreißen des Polymerfilmes.

Tabelle 4

zeigt das Verhalten der erfindungsgemäßen Wachse in einfachen Pflegmittelrezepten

| Bsp. | Emulsion aus Bsp. | Glanz 1. Aufstr. | Glanz 2. Aufstr. | Schwarzanschmutzung | Filmverletzungen durch Absatzstriche |
|---|---|---|---|---|---|
| 32 | 17 | 20 | 39 | 2 | 1 |
| 33 | 18 | 21 | 40 | 2 | 1 |
| 34 | 19 | 19 | 39 | 2 | 1 |
| 35 | 20 | 17 | 36 | 2-3 | 2 |

Tabelle 5

zeigt Vergleichsversuche mit Wachsemulsionen gemäß dem Stand der Technik in einfachen Pflegemittelrezepten

| Bsp. | Emulsion aus Bsp. | Glanz 1. Aufstrich | Glanz 2. Aufstrich | Schwarzanschmutzung | Filmverletzung durch Absatzstriche |
|---|---|---|---|---|---|
| 36 | 31 | 15 | 30 | 4 | 3 |
| 37 | 29 | 17 | 36 | 4 | 4 |
| 38 | 28 | 16 | 37 | 4 | 3-4 |

Patentansprüche

1. In Wasser emulgierbare Hartwachse bestehend aus homogenen Terpolymeren des Ethylens mit - bezogen auf das Gewicht des Terpolymeren - 1 bis 8 Gew.% an $C_3$- bis $C_8$-olefinisch ungesättigten Carbonsäuren, und 0,5 bis 10 Gew.% an $C_1$- bis $C_{12}$-Alkylestern der ungesättigten Carbonsäuren, gekennzeichnet durch folgende Kenndaten:

| | |
|---|---|
| Staudinger Index bestimmt nach DIN 53 728 | 5 bis 55 |
| Säurezahl | 8 bis 62 |
| Höppler-Härte nach DGF-Einheitsmethode M-III-9a(57), gemessen bei 23°C | 250 bis 800 bar |

2. Hartwachse nach Anspruch 1, hergestellt durch Copolymerisation des Ethylens mit olefinisch unge-sättigten $C_3$-bis $C_8$ Carbonsäuren und ungesättigten $C_3$- bis $C_8$-Carbonsäureestern mit $C_1$- bis $C_{12}$-Alkanolen in kontinuierlicher Fahrweise in Gegenwart von Radikale bildenden Initiatoren bei Temperaturen von 150 bis 300°C und Drücken von 1000 bis 3000 bar in einem Gewichtsverhältnis Ethylen zu Säure zu Acrylat wie 500:1:1 bis 20:1:1 in einphasigem Polymerisationsmilieu, in dem die Monomeren löslich sind, und in Gegenwart von 0,01 bis 8 Gew.-%,bezogen auf die Summe der Monomeren an Reglern, wobei 3 bis 25 Gew.-% des Ethylens umgesetzt und das gebildete Copolymerisat kontinuierlich aus der Reaktionszone entfernt wird.

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | DE-A-1 520 497  (DU PONT DE NEMOURS) <br> * Ansprüche 1-6; Seite 16 * | 1,2 | C 08 F 210/02 |
| | --- | | |
| Y | FR-A-2 149 784  (DOW CHEMICAL) <br> * Ansprüche 1,3-5; Seite 5; Seite 7, Zeile 33 - Seite 8, Zeile 29 * | 1,2 | |
| | --- | | |
| A | DE-A-1 520 493  (DU PONT DE NEMOURS) <br> * Ansprüche 1-3 * | 1,2 | |
| | ----- | | |

RECHERCHIERTE SACHGEBIETE (Int. Cl. 3)

C 08 F 210/00
C 08 F 210/02
C 08 F   2/02
C 08 F   2/00
C 08 F   4/28
C 08 F   4/30
C 08 F   4/32
C 08 F   4/34
C 08 F   4/36
C 08 F   4/38
C 08 F   4/40

Der vorliegende Recherchenbericht wurde für alle Patentansprüche erstellt.

| Recherchenort <br> DEN HAAG | Abschlußdatum der Recherche <br> 15-07-1982 | Prüfer <br> PERMENTIER W.A. |
|---|---|---|